# FASCICULE DE BREVET EUROPEEN

(11) **EP 2 256 904 B1**
(45) Date de publication et mention de la délivrance du brevet: **15.05.2013**
(21) Numéro de dépôt: 10305556.2
(22) Date de dépôt: 25.05.2010
(51) Int. Cl.: H02K 1/18, H02K 5/24

(54) **Structure de support d'un stator d'une machine électrique tournante et machine électrique tournante comprenant une telle structure de support**
Halterungsstruktur für rotierende elektrische Maschine, sowie rotierende elektrische Maschine mit solche Halterungsstruktur
Supporting structure of a rotating electrical machine stator and rotating electrical machine stator with said supporting structure

(30) Priorité: 26.05.2009 FR 0953436
(43) Date de publication de la demande: 01.12.2010
(73) Titulaire: Converteam Technology Ltd, Rugby Warwickshire CV21 1BU (GB)
(72) Inventeur: Foissey, Jean-Marie, 54460, Liverdun (FR)
(74) Mandataire: Jacobson, Claude

(56) Documents cités:
- EP-A2- 1 833 139
- WO-A1-00/57535
- FR-A- 1 011 924
- FR-A- 1 379 408
- US-A- 1 871 238
- US-A- 4 587 722
- US-A1- 2002 074 884
- US-B1- 6 378 834

## Description

La présente invention concerne une structure de support d'un stator d'une machine électrique tournante et une machine électrique tournante comprenant une telle structure de support du stator.

Ce genre de machines électriques comprend, disposés concentriquement depuis l'axe de la machine vers l'extérieur, un arbre, un rotor solidaire de l'arbre et un stator monté dans une carcasse de stator.

De telles machines sont bien connues dans la technique, qu'il s'agisse de générateur ou de moteur, par exemple de moteur asynchrone.

De manière classique, le stator comprend des enroulements conducteurs s'étendant à l'intérieur de paquets de tôles magnétiques placés entre deux plateaux de serrage radiaux, reliés par des barreaux de tension longitudinaux.

La carcasse formant une structure de support du stator comprend notamment une enveloppe extérieure et deux flasques s'étendant radialement vers l'intérieur de l'enceinte. Chaque flasque est destiné à supporter le stator et comporte, à cet effet, un orifice axial de centrage d'un plateau de serrage de ce stator. La solidarisation du stator avec la carcasse est jusqu'à présent obtenue par frettage à chaud de la carcasse sur le stator. Pour cela, la carcasse est chauffée, puis le stator est positionné par coulissement dans la carcasse de façon à placer chaque plateau de serrage du stator dans un orifice d'un flasque de la carcasse. En se refroidissant, la carcasse se rétracte et le diamètre de l'orifice de chaque flasque diminue ce qui a pour effet de serrer le plateau correspondant du stator et d'assurer le blocage de celui-ci en rotation et axialement.

Mais, cette technique d'assemblage par frettage à chaud a pour inconvénient d'être longue à mettre en oeuvre et coûteuse.

On connaît dans le document US 4 587 722 A une structure de support d'un stator d'une machine électrique tournante comprenant :
- des enroulements conducteurs s'étendant à l'intérieur des paquets de tôles magnétiques, placés entre deux plateaux de serrage radiaux, reliés par des barreaux de tension longitudinaux,
- ladite structure comprenant une carcasse comportant notamment une enveloppe extérieure et deux flasques s'étendant radialement vers l'intérieur de l'enveloppe,
- chaque flasque comporte une portion inférieure formée par un premier arc de cercle de rayon sensiblement égal au rayon du plateau de serrage correspondant et déterminant une portée d'appui dudit plateau de serrage, et
- des moyens de blocage axial et de mise en précontrainte dudit stator dans cette carcasse.

Le but de l'invention est donc de proposer une structure de support d'un stator qui évite ces inconvénients et qui permet de bloquer de manière efficace le stator en rotation et axialement.

A cet effet, l'invention a pour objet une structure de support d'un stator d'une machine électrique tournante, ledit stator comprenant des enroulements conducteurs s'étendant à l'intérieur de paquets de tôles magnétiques placés entre deux plateaux de serrage radiaux, reliés par des barreaux de tension longitudinaux et ladite structure comprenant une carcasse comportant notamment une enveloppe extérieure et deux flasques s'étendant radialement vers l'intérieur de l'enceinte et munis chacun d'un orifice axial de centrage des plateaux de serrage, l'orifice de chaque flasque comportant,une portion inférieure formée par un premier arc de cercle de rayon sensiblement égal au rayon du plateau de serrage correspondant et déterminant une portée d'appui dudit plateau de serrage et, des moyens de blocage axial et de mise en précontrainte dudit stator dans cette carcasse, caractérisé en ce que l'orifice de chaque flasque comporte une portion supérieure formée par un second arc de cercle de rayon supérieur au rayon du plateau de serrage et des moyens de blocage en rotation du stator dans la carcasse.

Suivant d'autres modes de réalisation, la structure de support comprend une ou plusieurs des caractéristiques suivantes prises isolement ou suivant toutes les combinaisons techniquement possibles :
- le premier arc de cercle est inférieur à la demie circonférence de l'orifice et le premier et le second arcs de cercle sont reliés entre eux par des décrochements,
- l'un des deux plateaux de serrage du stator comporte un rebord d'appui sur le flasque correspondant de la carcasse,
- les moyens de blocage en rotation comprennent pour chaque flasque au moins deux ensembles comportant chacun une pièce support fixée sur une face latérale dudit flasque et au moins une butée latérale montée sur ladite pièce support et en saillie à l'intérieur de l'orifice de ce flasque pour coopérer avec un barreau de tension du stator, la butée latérale de chaque ensemble étant montée sur la pièce support correspondante à l'opposé l'une par rapport à l'autre pour bloquer le stator en rotation dans les deux sens,
- la pièce support de chaque ensemble comporte deux butées latérales opposées déterminant entre elles un logement pour un barreau de tension du stator,
- au moins une cale de compensation est interposée entre ladite au moins butée latérale d'au moins un ensemble et le barreau de tension correspondant pour rattraper les variations dimensionnelles de l'enveloppe de la carcasse,
- la pièce support de chaque ensemble est reliée à l'enveloppe de la carcasse par au moins une barre de rigidification,
- les moyens de blocage axial comprennent au niveau de la portion supérieure de l'orifice de chaque flasque, au moins deux poussoirs disposés dans une ouverture ménagée dans le flasque et débouchant dans ledit orifice, chaque poussoir étant déplaçable par des moyens d'actionnement en direction de l'axe du stator pour plaquer les plateaux de serrage de ce stator contre les portions inférieures des orifices des flasques,
- chaque poussoir comprend une pièce en forme de T montée coulissante dans l'ouverture du flasque et dont la branche horizontale déborde de chaque côté du flasque et est associée auxdits moyens d'actionnement, et
- les moyens d'actionnement comprennent de part et d'autre du flasque, un élément de vissage traversant la branche horizontale du poussoir et coopérant avec un trou taraudé ménagé dans une butée fixe solidaire du flasque au-dessous de ladite branche horizontale.

L'invention a également pour objet une machine électrique tournante du type comprenant un rotor, un stator et une structure de support de ce stator telle que précédemment définie.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'une machine électrique tournante comportant un stator et une structure de support du stator, conforme à l'invention, le stator étant représenté en dehors de la structure de support,
- la Fig. 2 est une vue schématique en perspective de la machine électrique tournante, avec le stator positionné à l'intérieur de la structure de support,
- la Fig. 3 est une vue schématique en coupe transversale selon la ligne 3-3 de la Fig. 1,
- la Fig. 4 est une vue schématique en coupe longitudinale axiale de la structure de support avec le stator,
- les Figs. 5, 6, 7 et 8 sont des vues à plus grande échelle des détails, respectivement V, VI, VII et VIII de la Fig. 4,
- la Fig. 9 est une vue schématique en perspective et à plus grande échelle des moyens de blocage en rotation du stator dans la structure de support, et
- les Figs. 10, 11 et 12 sont des vues schématiques en perspectives et à plus grande échelle des moyens de blocage axial du stator dans la structure de support.

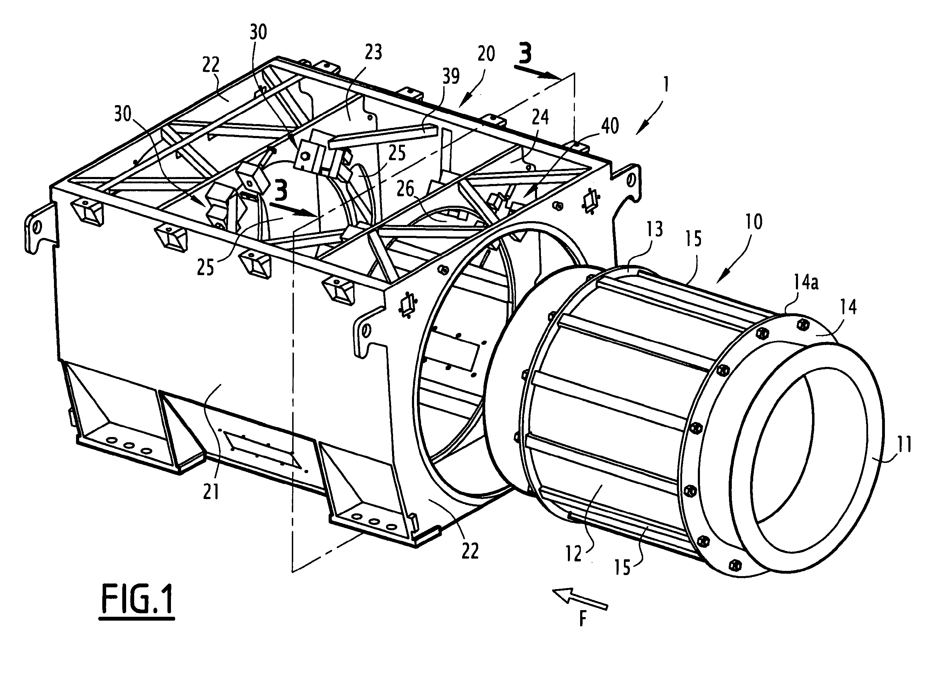

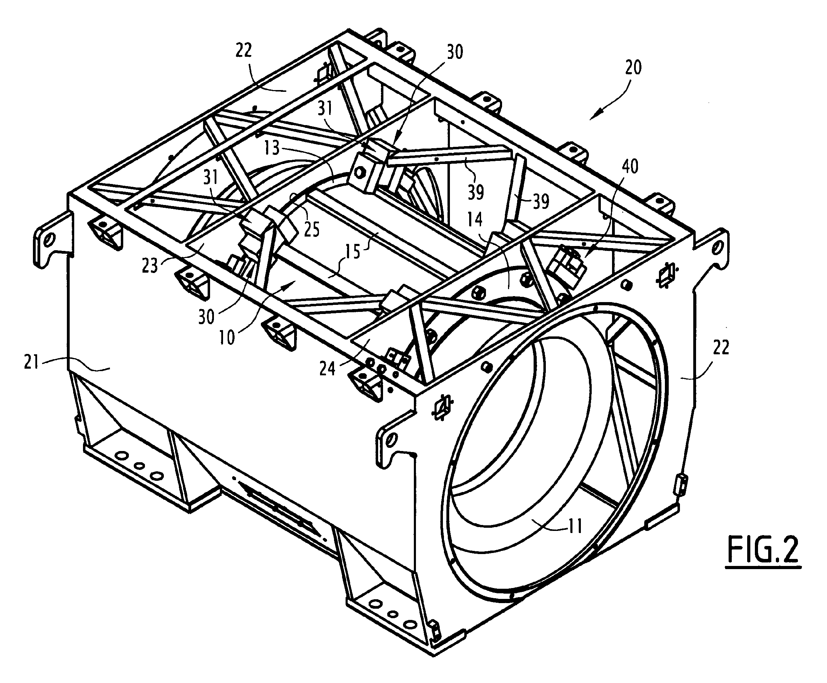

Sur les Figs. 1 et 2, on a représenté une machine électrique tournante désignée dans son ensemble par la référence 1 et qui comprend de manière classique, notamment un stator 10 et une structure de support formée par une carcasse 20.

Le stator 10 comprend des enroulements conducteurs 11 s'étendant à l'intérieur de paquets 12 de tôles magnétiques, placés entre deux plateaux de serrage radiaux, respectivement 13 et 14, reliés par des barreaux de tension 15 longitudinaux. Le stator 10 est introduit à l'intérieur de la carcasse 20 par coulissement dans une direction représentée par la flèche F sur la Fig. 1 et dans ce qui suit, le plateau de serrage 13 sera dénommé, plateau avant et le plateau de serrage 14 sera dénommé plateau arrière.

Ainsi que représenté sur les Figs. 1 et 5 à 8, le plateau avant 13 est formé par un anneau circulaire et le plateau arrière 14 est formé par un anneau circulaire muni d'un rebord 14a en saillie, destiné à jouer le rôle d'une butée dans la carcasse 20, ainsi qu'on le verra ultérieurement.

Comme montré sur les Figs. 1 et 2, la carcasse 20 de la structure de support du stator 10 comporte une enveloppe extérieure 21 munie à chacune de ses extrémités d'une plaque d'extrémité 22 formant chacune un support d'un palier, non représenté, d'un arbre, non représenté.

L'enveloppe extérieure 21 de la carcasse 20 comporte deux flasques, respectivement 23 et 24, parallèles s'étendant radialement vers l'intérieur de l'enveloppe 21.

Les flasques 23 et 24 sont munis chacun d'un orifice axial, respectivement 25 et 26, de centrage d'un plateau de serrage du stator 10 , respectivement du plateau avant 13 dans l'orifice 25 du flasque 23 et du plateau arrière 14 dans l'orifice 26 du flasque 24.

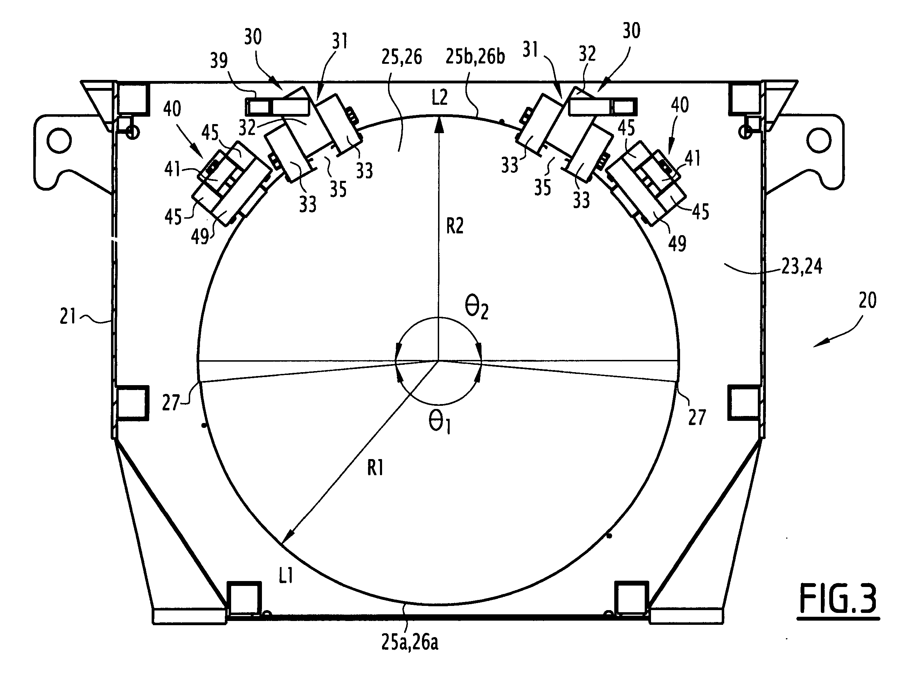

En se reportant à la Fig. 3, on va décrire par exemple l'orifice 25 du flasque 23, le diamètre de l'orifice 26 du flasque 24 étant supérieur au diamètre de l'orifice 25.

Sur cette figure, l'orifice et les éléments se rapportant à cet orifice seront désignés par les deux références 25 et 26.

Ainsi que montré à la Fig. 3, l'orifice 25 ménagé dans le flasque 23 comporte une partie inférieure 25a formée par un premier arc de cercle de rayon R1 sensiblement égal au rayon du plateau de serrage 13 ou 14. L'orifice 25 comporte également une portion supérieure 25b formée par un second arc de cercle de rayon R2 supérieur au rayon du plateau de serrage 13 ou 14 du stator 10. Les deux portions, respectivement inférieure 25a et supérieure 25b, sont reliées entre elles par des décrochements 27.

Le premier arc de cercle de la portion inférieure 25a présente, entre les deux décrochements 27, une distance L1 inférieure à la distance L2 du second arc de cercle de la portion supérieure 25b et l'angle θ1 est inférieur à l'angle θ2.

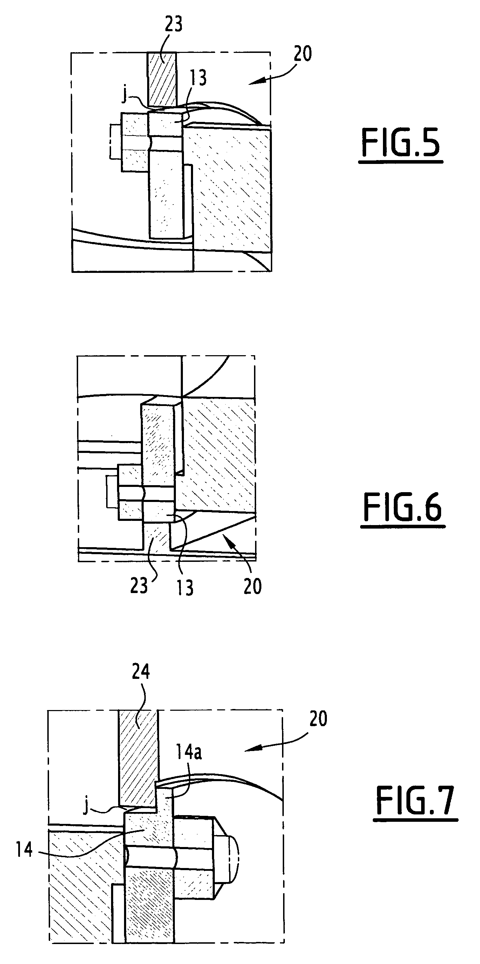

Comme cela apparaît sur les Figs. 5 et 6, après l'introduction du stator 10 dans l'enveloppe 21 de la carcasse 20, le plateau avant 13 de ce stator 10 ménage avec la portion supérieure 25b de l'orifice 25, un jeu j (Fig. 5) et ce plateau avant 13 est en appui sur la portion inférieure 25a de cet orifice 25 (Fig. 6).

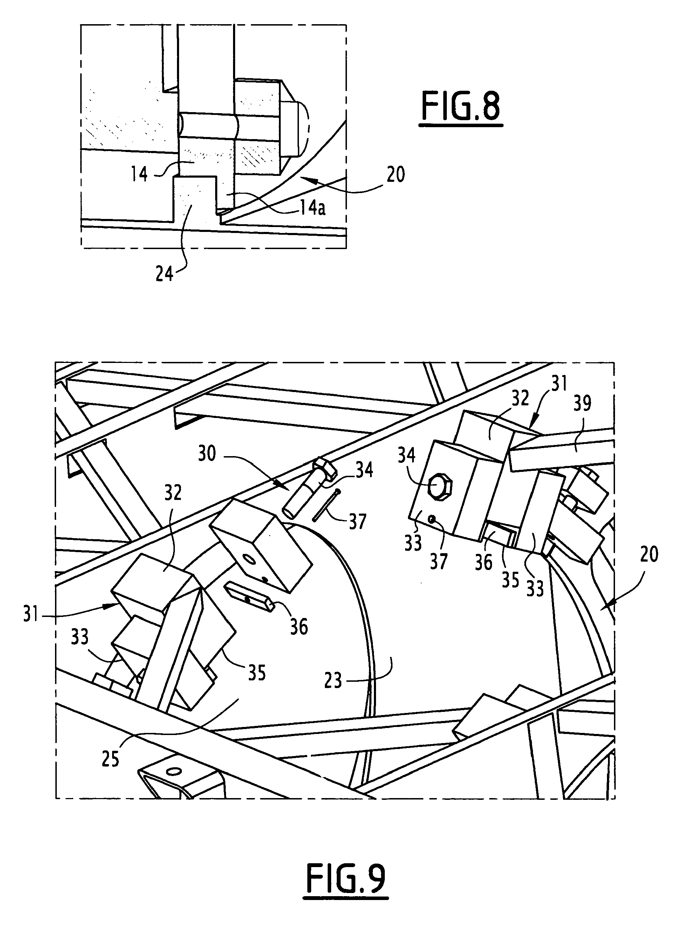

De même, le plateau arrière 14 du stator 10 ménage avec la portion supérieure 26a de l'orifice 26 du flasque 24 un jeu j (Fig. 7) tandis que ce plateau arrière 14 est en appui sur la portion inférieure 26a de l'orifice 26 (Fig. 8).

Comme montré sur les Figs. 7 et 8, le rebord 14a du plateau arrière 14 est en appui sur le flasque 24.

Les flasques 23 et 24 de l'enveloppe 21 de la carcasse 20 comportent également chacun des moyens 30 de blocage en rotation du stator 10 dans la carcasse 20 et les moyens 40 de blocage axial et de mise en précontrainte dudit stator 10 dans cette carcasse 20.

En se reportant maintenant aux Figs. 2 et 9, on va décrire les moyens 30 de blocage en rotation du stator 10.

Les moyens 30 de blocage en rotation comprennent pour chaque flasque 23 et 24 au moins deux ensembles 31.

En référence à la Fig. 9, on va décrire un ensemble 31, l'autre étant identique.

L'ensemble 31 comporte une pièce support 32 fixée sur la face latérale du flasque 23 ou 24, par exemple par soudage ou par tout autre moyen approprié. Cette pièce support 32 présente par exemple la forme d'un parallélépipède rectangle. L'ensemble 31 comporte également au moins une butée latérale 33 montée sur le côté de la pièce support 32.

Dans l'exemple de réalisation représenté à la Fig. 9, chaque ensemble 31 comporte deux butées latérales 33 opposées et fixées chacune par exemple par une vis 34 sur une paroi de la pièce support 32. Les butées latérales 33 sont en saillie à l'intérieur de l'orifice 25 ou 26 et ménagent entre elles un logement 35 pour coopérer avec un barreau de tension 15 du stator 10 afin de bloquer ce stator 10 en rotation dans les deux sens.

Afin de compenser les variations dimensionnelles de l'enveloppe 21 de la carcasse 20, au moins une cale de compensation 36 est interposée entre chaque butée latérale 33 et le barreau de compensation 15 correspondant. Chaque cale de compensation 36 est maintenue en position par exemple par une vis 37.

Selon une variante, chaque ensemble 31 comporte une seule butée latérale 33. Dans ce cas, la butée latérale de chaque ensemble 31 est montée sur chaque pièce support 32 à l'opposé l'une par rapport à l'autre pour bloquer le stator 10 en rotation dans les deux sens.

Comme cela apparaît sur les Figs. 1 et 2, la pièce support 32 de chaque ensemble 31 est reliée à l'enveloppe 21 de la carcasse 20 par une barre de rigidification 39.

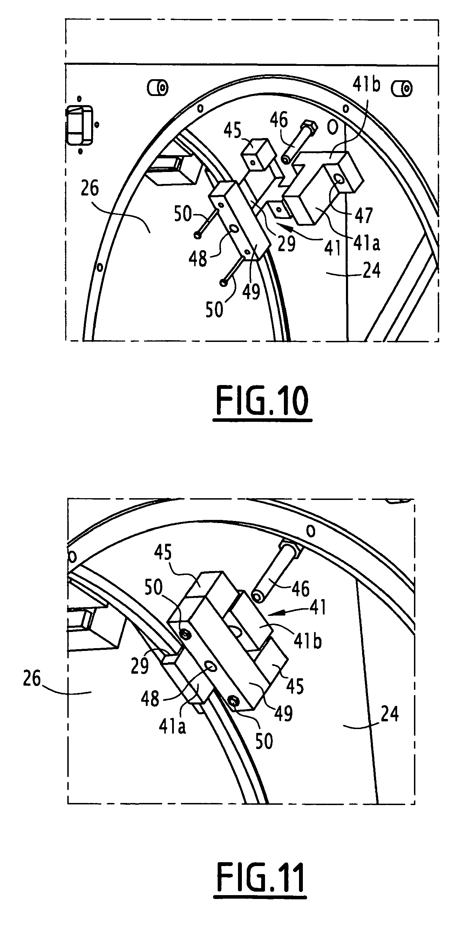

En se reportant maintenant aux Figs. 10 à 12, on va décrire des moyens 40 de blocage axial et de mise en précontrainte du stator 10 dans l'enveloppe 21 de la carcasse 20.

Les moyens 40 de blocage axial comprennent au niveau de la portion supérieure 25b et 26b de chaque orifice 25 et 26 des flasques 23 et 24, au moins deux poussoirs 41. Le flasque 24 comporte une ouverture 29 qui débouche dans l'orifice 26 et qui est destinée à recevoir le poussoir 41. Les poussoirs 41 disposés sur les flasques 23 et 24 sont tous identiques.

Comme représenté plus particulièrement à la Fig. 10, le poussoir 41 est constitué par une pièce en forme de T montée coulissante dans l'ouverture 29. Ce poussoir 41 comporte une branche principale 41a qui selon la position de ce poussoir 41 dans l'ouverture 29, peut être en saillie dans l'ouverture 26, et une branche horizontale 41 b.

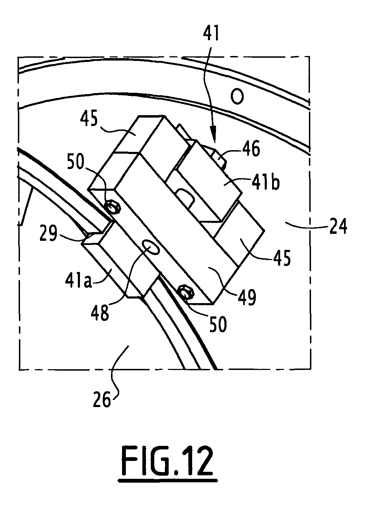

Après le positionnement du poussoir 41 dans l'ouverture 29, la branche horizontale 41 b déborde de chaque côté du flasque 24, comme représentée sur les Figs. 11 et 12. Le coulissement du poussoir 41 dans l'ouverture 29 est guidé de chaque côté du flasque 23 ou 24 par deux patins 45 coopérant avec une portion de la branche horizontale 41 b du poussoir 41.

Le poussoir 41 est déplaçable par des moyens d'actionnement en direction de l'axe du stator 10 pour bloquer le plateau de serrage 13 ou 14 correspondant contre la portion inférieure 25a ou 26a de l'orifice 25 ou 26 des flasques 23 ou 24.

Les moyens d'actionnement de chaque poussoir 41 comprennent de part et d'autre du flasque 24, un élément de vissage 46 traversant la branche horizontale 41 b par un trou lisse 47 et coopérant avec un trou taraudé 48 ménagé dans une butée 49 fixe. Cette butée 49 est maintenue sur la face latérale du flasque 24 et en appui contre les patins 45 par deux vis 50 vissées dans des orifices taraudés ménagés dans lesdits patins 45. Cette butée 49 est positionnée au-dessous de la branche horizontale 41 b du poussoir 41, comme montré sur les Figs. 11 et 12.

Ainsi, lors de la rotation des éléments de vissage 46, le poussoir 41 correspondant coulisse dans l'ouverture 29 et se déplace en direction de l'axe du stator 10 du fait des butées 49 dans lesquelles les éléments de vissage 46 se vissent.

La fixation du stator 10 à l'intérieur de l'enveloppe 21 de la carcasse 20 s'effectue de la manière suivante.

Tout d'abord, les opérateurs introduisent ce stator 10 dans l'enveloppe 21 en le faisant coulisser selon la direction indiquée par la flèche F sur la Fig. 1. Le plateau avant 13 du stator 10 vient se positionner dans l'orifice 25 du flasque 23 et le plateau arrière 14 vient se positionner dans l'orifice 26 du flasque 24. Le rebord 14a du plateau arrière 14 vient en appui contre le flasque 24, comme montré sur les Figs. 6 et 8.

Les opérations suivantes consistent à bloquer le stator 10 en rotation et axialement et à le mettre en précontrainte.

Pour cela, les opérateurs montent au moyen des vis 34 les butées latérales 33 sur les pièces support 32 des flasques 23 et 24. Un barreau de tension 15 du stator 10 est positionné dans chaque logement 35 ménagé entre les butées latérales 33 de chaque ensemble 31.

Afin de rattraper les variations dimensionnelles de l'enveloppe 21 de la carcasse 20, les opérateurs mettent en place au niveau de chaque ensemble 31, les cales de compensation 36 et ces cales de compensation 36 sont maintenues au moyen des vis 37.

Pour bloquer le stator 10 axialement et le mettre en précontrainte, les opérateurs actionnent les deux vis 46 de chaque poussoir 41 provoquant ainsi le coulissement des poussoirs 41 dans les ouvertures 29 et le déplacement de ces poussoirs 41 en direction de l'axe du stator 10.

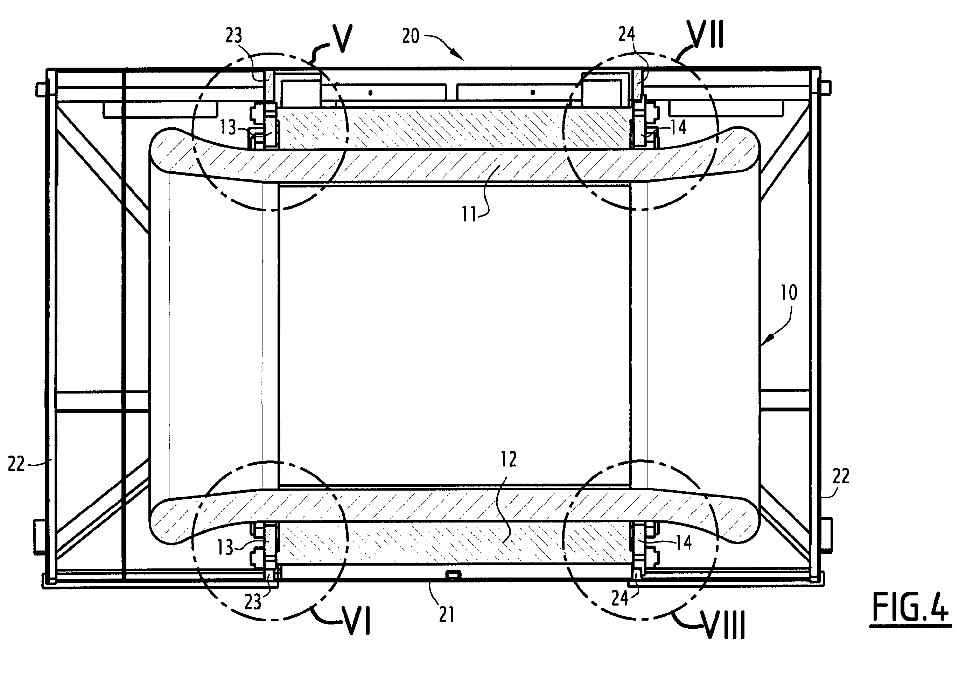

Les extrémités libres des poussoirs 41 du flasque 23 pénètrent dans l'orifice 25 et viennent s'appliquer contre le plateau avant 13 du stator 10 ce qui a pour effet de plaquer le plateau avant 13 contre la portion inférieure 25a de l'orifice 25, comme cela apparaît sur la Fig. 4 et 6. De même, en actionnant les vis 46 des poussoirs 41 du flasque 24, les extrémités libres des branches principales 41 a de ces poussoirs 41 pénètrent dans l'orifice 26 du flasque 24 et viennent en butée contre le plateau arrière 14 du stator 10 ce qui a pour effet de plaquer ce plateau arrière 14 contre la portion inférieure 26a de l'orifice 26, comme montrer sur les Figs. 4 et 8.

Le stator 10 est donc bloquer en rotation et axialement et également mis en précontrainte dans l'enveloppe 21 de la carcasse 20 et cela de manière efficace et par des moyens simples à mette en oeuvre et peu coûteux.

## Revendications

1. Structure de support d'un stator (10) d'une machine électrique tournante, ledit stator (10) comprenant des enroulements conducteurs (11) s'étendant à l'intérieur de paquets de tôles magnétiques, placés entre deux plateaux de serrage (13, 14) radiaux, reliés par des barreaux de tension (15) longitudinaux et ladite structure comprenant une carcasse (20) comportant notamment une enveloppe extérieure (21) et deux flasques (23, 24) s'étendant radialement vers l'intérieur de l'enveloppe (21) et munis chacun d'un orifice (25, 26) de centrage des plateaux de serrage (13, 14), l'orifice (25, 26) de chaque flasque (23, 24) comportant, des moyens (40) de blocage axial et de mise en précontrainte dudit stator (10) dans cette carcasse (20), **caractérisée en ce que** l'orifice (25, 26) de chaque flasque (23, 24) comporte une portion inférieur (25a, 26a) formée par un premier arc de cercle de rayon sensiblement égal au rayon du plateau de serrage (13, 14) correspondant et déterminant une portée d'appui dudit plateau de serrage (13, 14), et une portion supérieure (25b, 26b) formée par un second arc de cercle de rayon supérieur au rayon du plateau de serrage (13, 14) et des moyens (30) de blocage en rotation du stator (10) dans la carcasse (20).

2. Structure de support selon la revendication 1, **caractérisée en ce que** le premier arc de cercle (25a, 26a) est inférieur à la demie circonférence de l'orifice (25, 26) et le premier (25a, 26a) et le second (25b, 26b) arc de cercle sont reliés entre eux par des décrochements (27).

3. Structure de support selon la revendication 1 ou 2, **caractérisée en ce que** l'un (14) des plateaux de serrage (13, 14) du stator (10) comporte un rebord d'appui (14a) sur le flasque (24) correspondant de la carcasse (20).

4. Structure de support selon l'une quelconque des revendications 1 à 3, **caractérisée en ce que** les moyens (30) de blocage en rotation comprennent pour chaque flasque (23, 24) au moins deux ensembles (31) comportant chacun une pièce support (32) fixée sur une face latérale dudit flasque (23, 24) et au moins une butée latérale (33) montée sur ladite pièce support (32) et en saillie à l'intérieur de l'orifice (25, 26) de ce flasque (23, 24) pour coopérer avec un barreau de tension (15) du stator (10), la butée latérale (33) de chaque ensemble (31) étant montée sur la pièce support (32) correspondante à l'opposé l'une par rapport à l'autre pour bloquer le stator (10) en rotation dans les deux sens.

5. Structure de support selon la revendication 4, **caractérisée en ce que** la pièce support (32) de chaque ensemble (31) comporte deux butées latérales (33) opposées déterminant entre elles un logement (35) pour un barreau de tension (15) du stator (10).

6. Structure de support selon la revendication 4 ou 5, **caractérisée en ce qu'**au moins une cale de compensation (36) est interposée entre ladite au moins butée latérale (33) d'au moins un ensemble (31) et le barreau de tension (15) correspondant pour rattraper les variations dimensionnelles de l'enveloppe (21) de la carcasse (20).

7. Structure de support selon l'une quelconque des revendications 4 à 6, **caractérisée en ce que** la pièce support (32) de chaque ensemble (31) est reliée à l'enveloppe (21) de la carcasse (20) par au moins une barre de rigidification (39).

8. Structure de support selon l'une quelconque des revendications précédentes, **caractérisée en ce que** les moyens (40) de blocage axial comprennent au niveau des portions supérieures (25b, 26b) de l'orifice (25, 26) de chaque flasque (23, 24), au moins deux poussoirs (41) disposés chacun dans une ouverture (29) ménagée dans le flasque (23, 24) et débouchant dans ledit orifice (25, 26), chaque poussoir (41) étant déplaçable par des moyens (46 , 49) d'actionnement en direction de l'axe du stator (10) pour plaquer les plateaux de serrage (13, 14) de ce stator (10) contre les portions inférieures (25a, 26a) des orifices (25, 26) des flasques (23, 24).

9. Structure de support selon la revendication 8, **caractérisée en ce que** chaque poussoir (41) comprend une pièce en forme de T montée coulissante dans l'ouverture (29) du flasque (23, 24) et dont la branche horizontale (41 b) déborde de chaque côté du flasque (23, 24) et est associée auxdits moyens (46, 49) d'actionnement.

10. Structure de support selon la revendication 8 ou 9, **caractérisée en ce que** les moyens d'actionnement comprennent de part et d'autre du flasque (23, 24), un élément de vissage (46) traversant la branche horizontale (41a) du poussoir (41) et coopérant avec un trou taraudé (48) ménagé dans une butée fixe (49) solidaire du flasque (23, 24) en dessous de ladite branche horizontale (41b) du poussoir (41).

11. Machine électrique tournante du type comprenant un rotor, un stator et une structure de support de ce stator selon l'une quelconque des revendications précédentes.

## Patentansprüche

1. Struktur zum Tragen eines Stators (10) einer drehenden elektrischen Maschine, wobei der Stator (10) leitende Wicklungen (11) umfasst, die sich im Innern von magnetischen Blechpaketen erstrecken, die zwischen zwei radialen Spannplatten (13, 14), die durch längsgerichtete Spannstäbe (15) verbunden sind, angeordnet sind, und wobei die Struktur ein Gehäuse (20) umfasst, das insbesondere eine äußere Hülle (21) und zwei Flansche (23, 24) aufweist, die sich in radialer Richtung in das Innere der Hülle (21) erstrecken und jeweils mit einer Öffnung (25, 26) zum Zentrieren der Spannplatten (13, 14) versehen sind, wobei die Öffnung (25, 26) jedes Flansches (23, 24) Mittel (40) aufweist, um den Stator (10) in diesem Gehäuse (20) in axialer Richtung zu sperren und unter Vorspannung zu setzen, **dadurch gekennzeichnet, dass** die Öffnung (25, 26) jedes Flansches (23, 24) einen unteren Teil (25a, 26a) aufweist, der von einem ersten Kreisbogen gebildet ist, dessen Radius im Wesentlichen gleich dem Radius der entsprechenden Spannplatte (13, 24) ist, und eine Abstützfläche für die Spannplatte (13, 14) festlegt, und einen oberen Teil (25b, 26b), der durch einen zweiten Kreisbogen gebildet ist, dessen Radius größer als der Radius der Spannplatte (13, 14) ist, und Mittel (30), um den Stator (10) in dem Gehäuse (20) gegen Drehung zu sperren.

2. Tragestruktur nach Anspruch 1, **dadurch gekennzeichnet, dass** der erste Kreisbogen (25a, 26a) kleiner als der halbe Umfang der Öffnung (25, 26) ist und der erste (25a, 26a) und der zweite (25b, 26b) Kreisbogen durch Abkröpfungen (27) miteinander verbunden sind.

3. Tragestruktur nach Anspruch 1 oder 2, **dadurch gekennzeichnet, dass** die eine (14) der Spannplatten (13, 14) des Stators (10) einen Bund (14a) zum Abstützen auf dem entsprechenden Flansch (24) des Gehäuses (20) aufweist.

4. Tragestruktur nach einem der Ansprüche 1 bis 3, **dadurch gekennzeichnet, dass** die Drehsperrmittel (30) für jeden Flansch (23, 24) mindestens zwei Anordnungen (31) aufweisen, die jeweils ein Trageteil (32), das an einer Seitenfläche des Flansches (23, 24) befestigt ist, und mindestens einen seitlichen Anschlag (33), der an dem Trageteil (32) montiert ist und in das Innere der Öffnung (25, 26) dieses Flansches (23, 24) hineinragt, aufweisen, um mit einem Spannstab (15) des Stators (10) zusammenzuwirken, wobei der seitliche Anschlag (33) jeder Anordnung (31) an dem entsprechenden Trageteil (32) relativ zu dem anderen entgegengesetzt montiert ist, um den Stator (10) in beiden Richtungen gegen Drehung zu sperren.

5. Tragestruktur nach Anspruch 4, **dadurch gekennzeichnet, dass** das Trageteil (32) jeder Anordnung (31) zwei entgegengesetzte seitliche Anschläge (33) aufweist, die zwischen einander eine Aufnahme (35) für einen Spannstab (15) des Stators (10) festlegen.

6. Tragestruktur nach Anspruch 4 oder 5, **dadurch gekennzeichnet, dass** mindestens ein Ausgleichskeil (36) zwischen dem mindestens einen seitlichen Anschlag (33) mindestens einer Anordnung (31) und dem entsprechenden Spannstab (15) eingelegt ist, um die Dimensionsschwankungen der Hülle (21) des Gehäuses (20) auszugleichen.

7. Tragestruktur nach einem der Ansprüche 4 bis 6, **dadurch gekennzeichnet, dass** das Trageteil (32) jeder Anordnung (31) mit der Hülle (21) des Gehäuses (20) durch mindestens einen Versteifungsstab (39) verbunden ist.

8. Tragestruktur nach einem der vorhergehenden Ansprüche, **dadurch gekennzeichnet, dass** die axialen Sperrmittel (40) im Bereich der oberen Teile (25b, 26b) der Öffnung (25, 26) jedes Flansches (23, 24) mindestens zwei Schubelemente (41) umfassen, die jeweils in einem Spalt (29) angeordnet sind, der in dem Flansch (23, 24) vorgesehen ist und in der Öffnung (25, 26) ausmündet, wobei jedes Schubelement (41) durch Betätigungsmittel (46, 49) in Richtung der Achse des Stators (10) bewegbar ist, um die Spannplatten (13, 14) dieses Stators (10) gegen die unteren Teile (25a, 26a) der Öffnungen (25, 26) der Flansche (23, 24) zu bewegen.

9. Tragestruktur nach Anspruch 8, **dadurch gekennzeichnet, dass** jedes Schubelement (41) ein T-förmiges Teil umfasst, das in dem Spalt (29) des Flansches (23, 24) verschiebbar montiert ist und dessen horizontaler Schenkel (41 b) über jede Seite des Flansches (23, 24) übersteht und den Betätigungsmitteln (46, 49) zugeordnet ist.

10. Tragestruktur nach Anspruch 8 oder 9, **dadurch gekennzeichnet, dass** die Betätigungsmittel beiderseits des Flansches (23, 24) ein Verschraubungselement (46) umfassen, das den horizontalen Schenkel (41a) des Schubelements (41) durchsetzt und mit einem Gewindeloch (48) zusammenwirkt, das in einem ortsfesten Anschlag (49), der mit dem Flansch (23, 24) fest verbunden ist, unterhalb des horizontalen Schenkels (41 b) des Schubelements (41) vorgesehen ist.

11. Drehende elektrische Maschine des Typs umfassend einen Rotor, einen Stator und eine Struktur zum Tragen dieses Stators nach einem der vorhergehenden Ansprüche.

## Claims

1. A support structure for a stator (10) of a rotary electric machine, said stator (10) comprising conductive windings (11) extending inside magnetic stacks, placed between two radial gripping plates (13, 14), connected by longitudinal tension bars (15) and said structure comprising a shell (20) in particular including an outer enclosure (21) and two flanges (23, 24) extending radially toward the inside of the enclosure (21) and each provided with an orifice (25, 26) for centering the gripping plates (13, 14), the orifice (25, 26) of each flange (23, 24) including means (40) for axially blocking and pre-stressing said stator (10) in that shell (20), **characterized in that** the orifice (25, 26) of each flange (23, 24) includes a lower portion (25a, 26a) formed by a first arc of circle with a radius substantially equal to the radius of the corresponding gripping plate (13, 14) and determining a bearing surface of said gripping plate (13, 14), and an upper portion (25b, 26b) formed by a second arc of circle with a radius larger than the radius of the gripping plate (13, 14) and means (30) for locking the rotation of the stator (10) in the shell (20).

2. The support structure according to claim 1, **characterized in that** the first arc of circle (25a, 26a) is smaller than the half-circumference of the orifice (25, 26) and the first (25a, 26a) and second (25b, 26b) arcs of circle are connected to each other by recesses (27).

3. The support structure according to claim 1 or 2, **characterized in that** one (14) of the gripping plates (13, 14) of the stator (10) includes a bearing rim (14a) on the corresponding flange (24) of the shell (20).

4. The support structure according to any one of claims 1 to 3, **characterized in that** the rotational locking means (30) comprise, for each flange (23, 24), at least two assemblies (31) each including a support piece (32) fastened on a lateral surface of said flange (23, 24) and at least one lateral stop (33) mounted on said support piece (32) and protruding to the inside of the orifice (25, 26) of that flange (23, 24) to cooperate with a tension bar (15) of the stator (10), the lateral stop (33) of each assembly (31) being mounted on the corresponding support piece (32) opposite one another to lock the rotation on the stator (10) in both directions.

5. The support structure according to claim 4, **characterized in that** the support piece (32) of each assembly (31) includes two opposite lateral stops (33) determining a housing (35) between them for a tension bar (15) of the stator (10).

6. The support structure according to claim 4 or 5, **characterized in that** at least one compensating shim (36) is inserted between said at least one lateral stop (33) of the at least one assembly (31) and the corresponding tension bar (15) to make up the dimensional variations of the enclosure (21) of the shell (20).

7. The support structure according to any one of claims 4 to 6, **characterized in that** the support piece (32) of each assembly (31) is connected to the enclosure (21) of the shell (20) by at least one stiffening bar (39).

8. The support structure according to any one of the preceding claims, **characterized in that** the axial locking means (40) comprise, at the upper portions (25b, 26b) of the orifice (25, 26) of each flange (23, 24), at least two push-pieces (41) each arranged in an opening (29) formed in the flange (23, 24) and emerging in said orifice (25, 26), each push-piece (41) being movable using actuating means (46, 49) toward the axis of the stator (10) to press the gripping plates (13, 14) of that stator (10) against the lower portions (25a, 26a) of the orifices (25, 26) of the flanges (23, 24).

9. The support structure according to claim 8, **characterized in that** each push-piece (41) has a T-shaped piece slidingly mounted in the opening (29) of the flange (23, 24) and whereof the horizontal branch (41 b) overhangs each side of the flange (23, 24) and is associated with said actuating means (46, 49).

10. The support structure according to claim 8 or 9, **characterized in that** the actuating means comprise, on either side of the flange (23, 24), a screwing element (46) passing through the horizontal branch (41a) of the push-piece (41) and cooperating with a tapped hole (48) formed in a fixed stop (49) secured to the flange (23, 24) below said horizontal branch (41 b) of the push-piece (41).

11. A rotary electric machine comprising a rotor, a stator and a support structure for that stator according to any one of the preceding claims.
